# EUROPEAN PATENT SPECIFICATION

(11) **EP 1 955 055 B1**
(45) Date of publication and mention of the grant of the patent: **05.08.2009**
(21) Application number: 06837922.1
(22) Date of filing: 17.11.2006
(51) Int. Cl.: G01N 21/90, B07C 5/34

(54) **APPARATUS AND METHOD FOR ENSURING ROTATION OF A CONTAINER DURING INSPECTION**
VORRICHTUNG UND VERFAHREN ZUR SICHERSTELLUNG DER ROTATION EINES BEHÄLTERS WÄHREND EINER INSPEKTION
APPAREIL ET PROCEDE DESTINES A ENTRAINER EN ROTATION UN RECIPIENT PENDANT SON INSPECTION

(30) Priority: 23.11.2005 US 287331
(43) Date of publication of application: 13.08.2008
(73) Proprietor: OWENS-BROCKWAY GLASS CONTAINER INC., Perrysburg, OH 43551-2999 (US)
(72) Inventor: LANGENDERFER, Brian, A., Sylvania, OH 43560 (US); JUVINALL, John, W., Ottawa Lake, MI 49267 (US)
(74) Representative: Mergel, Volker
(86) International application number: PCT/US2006/044698
(87) International publication number: WO 2007/061855

(56) References cited:
- EP-A1- 1 298 428
- WO-A-20/04088295
- GB-A- 1 462 322
- US-A1- 4 066 363
- US-A1- 5 028 769
- US-A1- 5 305 081
- US-B1- 6 903 814

## Description

The present invention relates to inspection of containers such as glass containers, and more particularly to an apparatus and method for ensuring that the container is being rotated during an inspection operation.

### Background of the Invention

In the manufacture of containers such as glass bottles and jars, various types of anomalies can occur in the sidewalls, heels, bottoms, shoulders, necks and/or finishes of the containers. These anomalies, termed "commercial variations" in the art, can affect the commercial acceptability of the containers. Commercial variations can include variations such as stones or cracks in the walls of the container, or can include dimensional variations in the containers that can affect further processability of the containers.

It has been proposed to employ various electrical, electro-optical and electro-mechanical techniques to inspect containers for commercial variations. Many of these inspection techniques **such as in** US 6,903,814 B1 require that the container be held in stationary position and rotated around an axis during the inspection operation. It is important when employing such inspection techniques that the container actually be rotating during the inspection process. A container that is so malformed as to be non-rotatable, could be mistaken by **the** automated inspection equipment for a container that is rotating but in which no commercial variations are detected. In the same way, a malfunction at the mechanism for rotating the container such that the container is not rotated during the inspection operation could be mistaken by automated inspection equipment for a container that is rotating but in which no commercial variations are detected.

It also has been proposed to provide a reflector on a back-up roller engaged by the container and optics for monitoring the reflector. If the container itself is rotating, the container will rotate the back-up roller. Rotation of the back-up roller and its reflector is sensed by the optics to confirm that the container is being rotated during inspection. This technique requires addition of components (the reflector and optics) to the inspection station, and can be difficult to implement in an otherwise crowded inspection apparatus.

US 4,066,363 discloses a container inspection system in which light is directed through the container sidewall onto plural detectors. The outputs of the detectors are fed to comparators for identifying commercial variations in the container sidewall, and to a detector status circuit that monitors the amplitudes of the detector outputs to confirm that the container is rotating during inspection. The detector status circuit monitors the detector outputs in real time and is responsive to amplitudes of the detector outputs. An absence of amplitude variations at the detector outputs is interpreted as absence of rotation at the container, and a corresponding lamp is illuminated.

### Summary of the invention

The invention is defined in the claims; see apparatus claim 1 and method claim 5.

The present invention embodies a number of aspects that can be implemented separately from or in combination with each other.

The Apparatus for inspecting a container, in accordance with a first aspect of the present invention, includes an optical inspection device having at least one light source for directing light onto the container as the container is rotated around an axis, and at least one light sensor for receiving light energy from the light source following interaction with the container. An information processor is coupled to the sensor for detecting rotation of the container as a function of fluctuations in the output from the sensor. In other words, it is expected that rotation of the container will cause some fluctuation in the output of the sensor due to interaction of the light energy with the container. The absence of any detected fluctuations in the sensor output is interpreted as an indication that the container is not rotating, either due to malformation of the container, malfunction of the mechanism for rotating the container, or some other reason. A detected absence of rotation at the container preferably results in rejection of the container inasmuch as it cannot be confirmed that the container has been inspected.

In an apparatus for inspecting a container for commercial variations while the container is rotated around an axis, in accordance with another aspect of the present invention, facility for ensuring that the container is rotated during inspection includes at least one light source for directing light energy onto the container and at least one light sensor for receiving light energy from the light source following interaction with the container. An information processor detects rotation of the container as a function of fluctuations in the light energy received at the sensor. The information processor preferably gathers and stores image data from the sensor as a function of apparent rotation of the container, such as at increments of container rotation or at equal time increments while the container apparently is rotated at constant velocity. The information processor then analyzes the stored image data for fluctuations as a function of apparent container rotation. This is accomplished employing a sliding data window to identify fluctuations in the stored image data. The length of the image data window, the length of the sliding data window for analyzing the image data, and the magnitude of the fluctuations needed to indicate rotation of the container preferably are adjustable. Other image data analysis techniques can be used to detect fluctuations in the image data that confirm that the container is rotating during inspection.

### Brief Description of the Drawings

The disclosure, together with additional objects, features, advantages and aspects thereof, will best be understood from the following description, the appended claims and the accompanying drawings, in which:
FIG. 1 is a schematic diagram of a container inspection apparatus in accordance with one exemplary embodiment of the disclosure;
FIG. 2 is a schematic diagram of an apparatus for inspecting a container in accordance with another exemplary embodiment of the disclosure;
FIG. 3 is a schematic diagram of an apparatus for inspecting a container in accordance with a third exemplary embodiment of the disclosure; and
FIG. 4 is a graphic illustration of container inspection image analysis in the exemplary embodiment of FIG. 1.

### Detailed Description of Referred Embodiments

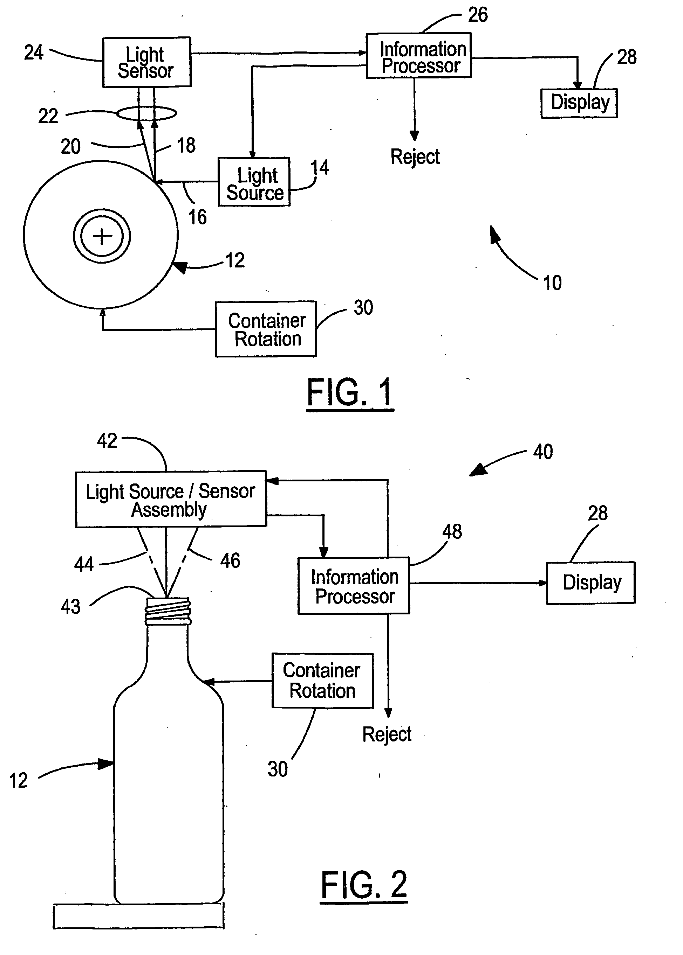

FIG. 1 illustrates an apparatus 10 for inspecting a container 12 in accordance with one exemplary embodiment of the disclosure. The apparatus includes a light source 14 for directing a light beam 16 onto the outer surface of the sidewall of container 12 at an angle such that a portion 18 of the light energy is reflected from the outer surface of the container sidewall, and a portion 20 is refracted into the container sidewall, reflected from the inner sidewall surface and then re-emerges from the outer sidewall surface. A lens 22 is disposed between a light sensor 24 and the container sidewall for directing onto the sensor light energy reflected from the inner and outer sidewall surfaces. An information processor 26 is responsive to signals from light sensor 24. Information processor 26 preferably is connected to a suitable display 28 for displaying inspection data, and to a suitable mechanism for rejecting containers 12 for which commercial variations detected at information processor 26 are of undesirable magnitude. To the extent thus far described, apparatus 10 is similar to that disclosed in U.S. Patent 5,291,271.

A container rotation mechanism 30 rotates container 12 around an axis of rotation as the container is illuminated by light source 14. Container rotation mechanism 30 may comprise a suitable device, such as a drive roller coupled to a suitable drive motor, for holding container 12 against back-up rollers or the like while rotating the container around an axis of rotation. Such axis of rotation preferably is coincident with the axis of the container. By way of example only, systems for bringing sequential containers 12 into position for inspection, rotating the containers in turn during an inspection operation, removing the containers following inspection and rejecting containers that do not pass inspection are illustrated in U.S. Patents 4,378,493 and 6,581,751. Information processor 26 scans and stores image data from light sensor 24 at increments of (apparent) container rotation, which can be equal angular increments of container rotation as detected by a suitable encoder coupled to a drive roller or motor, or equal time increments while the container is rotated at constant angular velocity. A combination of these techniques can be employed during acceleration and deceleration of (apparent) container rotation to increase container inspection speed.

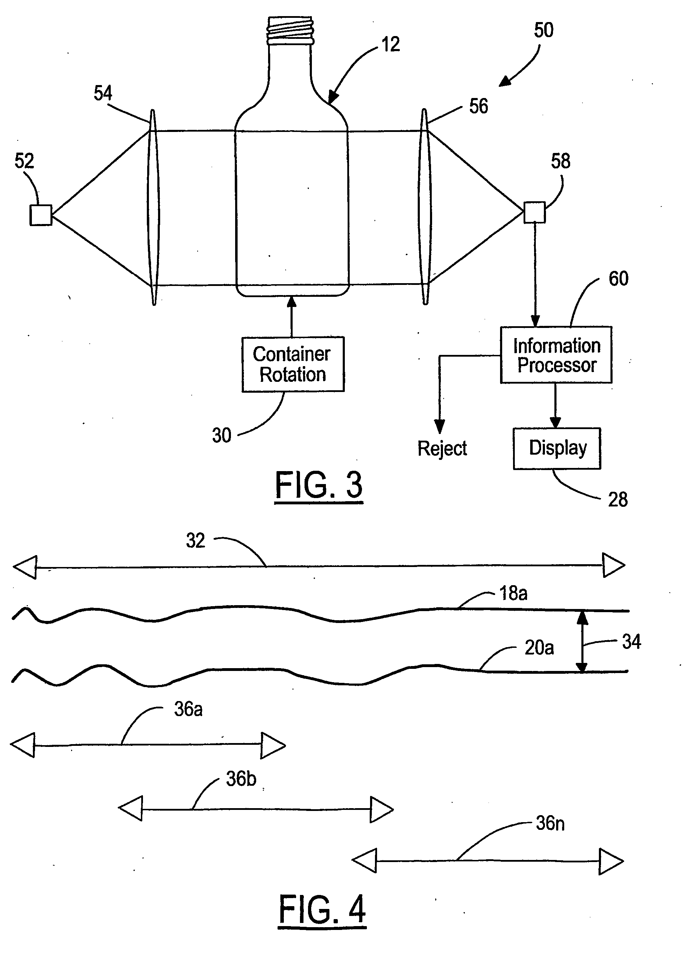

FIG. 4 illustrates image data 18a, 20a at light sensor 24 scanned and stored at information processor 26 for reflected light beams 18, 20 (FIG. 1) over an image width 32. Image width 32 preferably is in units of apparent container rotation, such as for example over a complete apparent revolution of the container. Image data 18a is indicative of the position of the outer surface of the container sidewall relative to light sensor 24, and image data 20a is indicative of the apparent position of the inside sidewall surface. (The relationship between image data 20a and the actual position of the inside container sidewall surface is discussed in above-noted U.S. Patent 5,291,271.) The separation 34 between data lines 18a, 20a is indicative of container sidewall thickness. Data 18a and 34 are analyzed to determine outer surface contour and sidewall thickness.

To confirm that the container is actually rotating during inspection in this exemplary embodiment, data 18a and 34 are analyzed for fluctuations that result from container rotation. In the illustrated embodiment, this data analysis is carried out using a sliding data window technique, for which three window positions 36a, 36b, 36n (in units of apparent container rotation) are indicated in FIG. 4. At each sliding window position, outside surface position data 18a and thickness data 34 are analyzed to identify fluctuations in the image data within the sliding window. It can be expected that, if the container is rotating during the inspection operation, there will be some fluctuation in image data caused by minor imperfections in the container geometry. Information processor 26 identifies these fluctuations to confirm that the container was actually rotating during the inspection operation. If the image data 18a,20a,34 are such that there are no fluctuations in the image data, information processor 26 determines that the container is not rotating during inspection, and preferably signals the container handling system to reject the container. A persistent container rotation failure may indicate malfunction of the container transport and/or rotation mechanism and call for repairs.

It will be noted in FIG. 4 that, although fluctuations in image data 18a and 34 (and image data 20a) are illustrated, these fluctuations may not be of sufficient magnitude to indicate an unacceptable commercial variation. Image data fluctuations that indicate an unacceptable commercial variation typically would be of greater magnitude (preferably adjustable) than image data fluctuations that indicate container rotation.

FIG. 2 illustrates a container inspection apparatus 40 that includes a light source/sensor assembly 42 positioned above the sealing surface 43 of container 12 to direct at least one beam 44 of light energy onto the container sealing surface and receive at least one reflected beam 46 from the sealing surface. There preferably are multiple light sources and sensors in assembly 42 in associated pairs to direct light energy onto and receive light energy reflected from angularly spaced positions around the sealing surface. Information processor 48 scans assembly 42, at fixed time or spatial increments of (apparent) container rotation as previously described, to receive signals indicative of the position or level of the sealing surface relative to assembly 42. To the extent thus far described, apparatus 40 is similar to that disclosed in U.S. Patent 6,903,814. Information processor 48 also analyzes fluctuations in the image data from assembly 42, following interaction of the light energy with container 12, to confirm that the container is rotating during the inspection operation. This is accomplished by analyzing reflected beam(s) 46 for fluctuations indicative of container rotation, such as by using a sliding window technique of the type discussed above.

FIG. 3 illustrates a third exemplary apparatus 50 in accordance with the present disclosure. A light source 52 directs light energy onto the sidewall of a container 12 under inspection, such as through a lens 54. Following interaction of the light energy with the container sidewall, such as by transmission through the sidewall or reflection from the sidewall, the light energy is directed onto a sensor 58, such as by a lens 56. An information processor 60 is responsive to the light energy at sensor 58, from light source 52 following interaction with container 12, both to detect commercial variations in container 12 and to confirm that the container is being rotated during the inspection operation. FIG. 3 is intended to be illustrative of numerous different types of container inspection techniques, of which the following disclosures are exemplary: U.S. Patents 4,442,934, 4,579,227, 4,584,469, 4,608,709, 4,644,151, 4,701,612, 4,945,228, 4,958,223, 5,200,801, 5,214,713, 5,233,186, 5,243,400, 5,442,446, 5,466,927, 5,610,391, 5,637,864, 5,896,195, 5,969,810, 6,025,909, 6,067,155, 6,104,482, 6,175,107, 6,256,095

There thus have been disclosed a method and apparatus for inspecting containers, such as glass containers, which ensure that the container is being rotated during the inspection operation. The basic principle of the present disclosure is that containers are not perfect, so that analysis of the inspection data should reveal fluctuations that may be within acceptable limits for commercial variations, but confirm that the container is being rotated during the inspection operation. A particular advantage of the exemplary embodiments of the present disclosure is that image data from performing other container inspection operations - e.g., container sidewall thickness and roundness in FIG. 1, container sealing surface inspection in FIG. 2 and container sidewall inspection in FIG. 3 - are employed for implementing the present disclosure by analyzing the data obtained during the inspection operation for fluctuations that confirm rotation of the container. As a less preferred alternative, a light source and sensor could be provided solely for confirming container rotation. The exemplary embodiments employ inspection data that are scanned into the information processor during (apparent) container rotation and then analyzed both for inspection purposes and to confirm container rotation. However, the inspection data could be monitored in real time during scanning to confirm container rotation. The disclosure has been presented in conjunction with several exemplary embodiments, and other modifications and variations have been described. Additional modifications and variations readily will suggest themselves to persons of ordinary skill in the art in view of the foregoing discussion. The disclosure is intended to embrace all such modifications and variations as fall within the broad scope of the appended claims.

## Claims

1. An apparatus for inspecting containers for commercial variations, comprising: means for rotating (30) a container (12) being inspected; at least one light source (14; 52) for directing light onto the container (12); at least one light sensor (24; 58) for receiving light from said source following interaction with the container (12) and for producing image data (18a; 20a; 34); and an information processor (26; 48; 60) coupled to the output of the sensor (24; 58) so as to scan and store the image data (18a; 20a; 34) of a container (12) under inspection and to process the data over an image width (32) corresponding to at least a complete apparent rotation of the container (12), **characterized in that** the information processor (26; 48; 60) includes means for ensuring that the container is actually rotating during inspection by detecting fluctuations in the sensor output and is arranged to employ a sliding data window (36a, 36b, 36n) having a length in units of apparent container rotation less than the image width (32).

2. The apparatus of claim 1
wherein the length of the sliding data window (36a, 36b, 36n) in units of apparent container rotation and the magnitude of fluctuations in the image data (18a; 20a; 34) are adjustable at the information processor (26; 48; 60).

3. The apparatus of claim 1 or 2
wherein the output signal of said at least one sensor (24; 58) is indicative of roundness and thickness of the container sidewall under inspection, the information processor (26; 48; 60) being responsive to both of said signals to detect the absence of rotation at the container.

4. The apparatus of any of claims 1-3 also including a reject mechanism for rejecting containers (12) having unacceptable commercial variations, wherein the information processor (26; 48; 60) is coupled to the reject mechanism for rejecting containers (12) for which the absence of rotation is detected.

5. A method of detecting rotation of a container (12) during optical inspection for commercial variations, in which light is analyzed after interaction with the container (12) to identify fluctuations in the light indicative of actual rotation of the container during inspection, said method including the steps of:
(a) scanning and storing image data (18a; 20a; 34) from a light sensor (24; 58) receiving the light from the container and at intervals as a function of apparent rotation of the container,
(b) following completion of said step (a) for an image width (32) corresponding to at least a complete apparent rotation of the container, analyzing the image data scanned and stored in said step (a) employing a sliding data window (36a; 36b; 36n) having a length in units of apparent container rotation less than said image width (32), and
(c) identifying fluctuations in said image data during said step (b) indicative of actual rotation of the container.

6. The method set forth in claim 5
wherein image data scanned and stored in said step (a) is indicative of position of a surface of the container **(12).**

## Patentansprüche

1. Vorrichtung zur Inspektion von Behältern auf kommerziell bedeutsame Abweichungen hin, umfassend:
Mittel zum Drehen (30) eines Behälters (12), der gerade inspiziert wird; zumindest eine Lichtquelle (14; 52) zum Lenken von Licht auf den Behälter (12); zumindest einen Lichtsensor (24; 58) zum Empfangen von Licht von der Quelle nach einer Wechselwirkung mit dem Behälter (12) und zum Erzeugen von Bilddaten (18a; 20a; 34); und einen Informationsprozessor (26; 48; 60), der mit dem Ausgang des Sensors (24; 58) gekoppelt ist, um so die Bilddaten (18a; 20a; 34) für einen gerade inspizierten Behälter (12) abzufragen und zu speichern und um die Daten auf einer Bildbreite (32) zu verarbeiten, die zumindest einer vollständigen scheinbaren Rotation des Behälters (12) entspricht,
**dadurch gekennzeichnet, dass** der Informationsprozessor (26; 48; 60) Mittel umfasst, um sicherzustellen, dass sich der Behälter während der Inspektion tatsächlich dreht, indem Schwankungen im Sensorausgangssignal erkannt werden, und dafür ausgelegt ist, ein sich verschiebendes Datenfenster (36a, 36b, 36n) zu nutzen, das eine Länge in Einheiten der scheinbaren Rotation des Behälters aufweist, die kleiner als die Bildbreite (32) ist.

2. Vorrichtung nach Anspruch 1, bei welcher die Länge des sich verschiebenden Datenfensters (36a; 36b, 36n) in Einheiten der scheinbaren Rotation des Behälters und die Stärke der Schwankungen in den Bilddaten (18a; 20a; 34) am Informationsprozessor (26; 48; 60) einstellbar sind.

3. Vorrichtung nach Anspruch 1 oder 2, bei welcher das Ausgangssignal des zumindest einen Sensors (24; 58) die Rundheit und die Dicke der Seitenwand des gerade inspizierten Behälters anzeigt, wobei der Informationsprozessor (26; 48; 60) auf diese beiden Signale anspricht, um eine fehlende Rotation des Behälters zu erkennen.

4. Vorrichtung nach einem der Ansprüche 1 - 3, welche außerdem einen Zurückweisungsmechanismus zum Zurückweisen von Behältern (12) umfasst, die inakzeptable kommerziell bedeutsame Abweichungen aufweisen, wobei der Informationsprozessor (26; 48; 60) mit dem Zurückweisungsmechanismus gekoppelt ist, um Behälter (12) zurückzuweisen, für die eine fehlende Rotation erkannt wird.

5. Verfahren zum Erkennen einer Rotation eines Behälters (12) während einer optischen Inspektion auf kommerziell bedeutsame Abweichungen hin, bei welchem Licht nach einer Wechselwirkung mit dem Behälter (12) analysiert wird, um Schwankungen des Lichts zu erkennen, die für eine tatsächliche Rotation des Behälters während der Inspektion kennzeichnend sind, wobei das Verfahren folgende Schritte umfasst:
(a) Abfragen und Speichern von Bilddaten (18a; 20a; 34) von einem Lichtsensor (24; 58), der das Licht von dem Behälter empfängt, und zwar in Intervallen in Abhängigkeit von der scheinbaren Rotation des Behälters;
(b) nach Beendigung des Schrittes (a) für eine Bildbreite (32), die zumindest einer vollständigen scheinbaren Rotation des Behälters entspricht, Analysieren der in Schritt (a) abgefragten und gespeicherten Bilddaten unter Nutzung eines sich verschiebenden Datenfensters (36a, 36b, 36n), das eine Länge in Einheiten der scheinbaren Rotation des Behälters aufweist, die kleiner als die Bildbreite (32) ist; und
(c) Erkennen von Schwankungen in den Bilddaten während Schritt (b), welche kennzeichnend für eine tatsächliche Rotation des Behälters sind.

6. Verfahren nach Anspruch 5, bei welchem die in Schritt
(a) abgefragten und gespeicherten Bilddaten eine Position einer Oberfläche des Behälters anzeigen.

## Revendications

1. Dispositif destiné à inspecter des récipients pour détecter des variations commerciales, comprenant :
un moyen (30) pour faire tourner un récipient (12) qui est en cours d'inspection ;
au moins une source de lumière (14 ; 52) pour diriger la lumière sur le récipient (12) ;
au moins un capteur de lumière (24 ; 58) pour recevoir la lumière venant de ladite source suite à l'interaction avec le récipient (12) et pour produire des données d'image (18a ; 20a ; 34) ; et
un dispositif de traitement d'informations (26 ; 48 ; 60) couplé à la sortie du capteur (24; 58) de manière à explorer et à mémoriser les données d'image (18a ; 20a ; 34) d'un récipient (12) en cours d'inspection et à traiter les données sur une largeur d'image (32) correspondant à au moins une rotation apparente complète du récipient (12),
**caractérisé en ce que** le dispositif de traitement d'informations (26; 48; 60) comprend des moyens pour s'assurer que le récipient est bien en train de tourner pendant l'inspection en détectant des fluctuations de la sortie du capteur et est disposé de manière à employer une fenêtre de données glissante (36a, 36b, 36n) ayant une longueur en unités de rotation apparente de récipient inférieure à la largeur d'image (32).

2. Dispositif selon la revendication 1, dans lequel la longueur de la fenêtre de données glissante (36a, 36b, 36n) en unités de rotation apparente de récipient et l'ampleur des fluctuations des données d'image (18a ; 20a ; 34) peuvent être réglées au niveau du dispositif de traitement d'informations (26 ; 48 ; 60).

3. Dispositif selon la revendication 1 ou 2, dans lequel le signal de sortie dudit au moins un capteur (24 ; 58) est indicatif de la rotondité et de l'épaisseur de la paroi latérale du récipient en cours d'inspection, le dispositif de traitement d'informations (26 ; 48 ; 60) réagissant à l'ensemble desdits signaux pour détecter l'absence de rotation au niveau du récipient.

4. Dispositif selon l'une quelconque des revendications 1 à 3, comprenant également un mécanisme de rejet pour rejeter les récipients (12) ayant des variations commerciales inacceptables, dans lequel le dispositif de traitement d'informations (26 ; 48 ; 60) est couplé au mécanisme de rejet pour rejeter les récipients (12) pour lesquels l'absence de rotation est détectée.

5. Procédé de détection de la rotation d'un récipient (12) au cours de l'inspection optique pour détecter des variations commerciales, dans lequel la lumière est analysée après interaction avec le récipient (12) pour identifier des fluctuations de la lumière indicatives de la rotation réelle du récipient au cours de l'inspection, ledit procédé comprenant les étapes consistant à :
(a) explorer et mémoriser les données d'image (18a ; 20a ; 34) provenant d'un capteur d'image (24 ; 58) recevant la lumière du récipient et à intervalles en fonction de la rotation apparente du récipient,
(b) suite à l'achèvement de ladite étape (a) pour une largeur d'image (32) correspondant à au moins une rotation apparente complète du récipient, analyser les données d'image explorées et mémorisées dans ladite étape (a) en employant une fenêtre de données glissante (36a, 36b, 36n) ayant une longueur en unités de rotation apparente de récipient inférieure à ladite largeur d'image (32), et
(c) identifier des fluctuations desdites données d'image au cours de ladite étape (b) indicatives de la rotation réelle du récipient.

6. Procédé selon la revendication 5, dans lequel les données d'image explorées et mémorisées dans ladite étape (a) sont indicatives de la position d'une surface du récipient (12).
